# EUROPEAN PATENT SPECIFICATION

(11) **EP 1 749 742 B1**
(45) Date of publication and mention of the grant of the patent: **25.11.2009**
(21) Application number: 06254091.9
(22) Date of filing: 04.08.2006
(51) Int. Cl.: B64D 37/02, B64D 13/00

(54) **Electronic module mounting means**
Mittel zur Befestigung eines elektronischen Moduls
Moyens de fixation d'un module électronique

(30) Priority: 05.08.2005 US 706176 P; 18.08.2005 US 709348 P
(43) Date of publication of application: 07.02.2007
(73) Proprietor: PARKER-HANNIFIN CORPORATION, Cleveland, Ohio 44124-4141 (US)
(72) Inventor: Orbell, Richard, Setauket, NY 11733 (US)
(74) Representative: Harris, Ian Richard

(56) References cited:
- EP-A- 0 976 653
- WO-A-2005/103477
- WO-A-2006/013346
- FR-A1- 2 862 724
- JP-A- 62 035 088
- US-A- 5 454 697
- US-A1- 2003 127 075

## Description

### Field of the Invention

The present invention relates generally to liquid sensing arrangements and, more specifically, to utilizing thermal energy stored in fuel to maintain a temperature of an area or device.

### Background of the Invention

On aircraft composed of carbon fiber composite wings, the length of wiring to sensors in wing-mounted fuel tanks is kept as short as possible. This minimizes the threat of a lightning strike conducting a significant quantity of energy into the fuel tank.

To minimize wiring length in the fuel tanks, several fuel level sensors in one or more fuel tanks connect to a local data concentrator device. This device, which is sometimes referred to as a remote data acquisition unit (RDAU) or remote data concentrator (RDC) (hereinafter referred to as an electronics module), is usually mounted just outside of the fuel tank on a spar. The electronics module has a sealed connector that passes through the tank wall, making electrical connections to sensors inside the fuel tank. The electronics module includes active electronic devices (often including a microprocessor) that have temperature ratings typically extending down to about minus forty degrees Celsius.

During flight, the temperature on a wing spar can fall as low as minus seventy degrees Celsius, which is significantly lower than the rating of many electronic devices. When an electronics module, such as the RDAU, is mounted on a spar of an aircraft's wing and connected to sensors within the wing's fuel tank, the electronics module is subjected to the low temperatures encountered during flight (e.g., as low as minus seventy degrees Celsius).

One approach to addressing these low spar temperatures is to add a heating element to the electronics module. The addition of the heating element, however, adds cost and complexity to the electronics module. Another approach has been to test all vulnerable electronic components at the minimum operating temperature seen at the spar. Then, only those components that can satisfactorily operate at these temperatures are used in the electronics module. Often, however, only a very small number of components can pass the test, resulting in low yields and, thus, increased costs.

US 5,454,697 discloses an in tank type electrical operated fuel pump assembly comprising an electric motor which is controlled by a control circuit located externally with a pump housing. US 2003/0127075 discloses a device including a closure element which closes an opening of a fuel tank and has a cup shaped receptacle which opens towards the inside of the fuel tank. WO 2005/103477 discloses a vehicle fuel system for an internal combustion engine. WO 2006/013346 discloses a fuel tank for an aircraft that includes a ground circuit for discharging electrical energy. JP 62 035088 discloses a fuel system wherein a control circuit is attached to a cover located on an upper part of a fuel tank. EP 0976653 discloses a lightening protection system for a composite aircraft structure. FR2862724 discloses a hydraulic fluid cooling device for an aircraft.

### Summary of the Invention

The present invention provides a system, apparatus and method for maintaining an ambient temperature for a device located within a vehicle, in particular an aircraft. More specifically, thermal energy stored within the vehicle's fuel is utilized to maintain the ambient temperature within safe operating regions of the device.

According to one aspect of the invention, there is provided a mount for coupling a device to a support structure in a vehicle, the vehicle including a fuel tank for storing fuel. The mount device includes a canister having at least one surface exposed to an inner portion of the fuel tank, the canister being impervious to the fuel. A cartridge is located inside the canister, the cartridge being in thermal communication with the at lease one surface, wherein the cartridge includes the device.

According to another aspect of the invention, there is provided a system for maintaining an ambient temperature of an area within an operational range of one or more devices located in the area. The system includes a fuel tank for storing fuel, and a heat exchanger operative to extract thermal energy from fuel stored in the fuel tank.

According to another aspect of the invention, there is provided a method of mounting a device in a vehicle so as to maintain an ambient temperature around the device within an operation range of the device. The method includes the steps of: placing at least one surface of a canister in fluid communication with the fuel, wherein said canister is impervious to said fuel; placing a cartridge inside the canister such that the cartridge is in thermal communication with the fuel; and placing the device inside the cartridge.

According to another aspect of the invention, there is provided a method of maintaining an ambient temperature for a device in a vehicle, including using thermal energy of fuel stored in the vehicle to heat or cool the device.

According to another aspect fo the invention, there is provided a mount for maintaining an ambient temperature of an area within an operational range of one or more devices located in the area. The mount includes a receptacle (e.g., a container or the like) extending into an interior of a fuel tank and opening to an exterior of the fuel tank, a sealed connector for establishing a through connection from the interior of the fuel tank to the interior of the receptacle, and a cartridge assembly insertable into the receptacle.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed.

### Brief Description of the Drawings

The forgoing and other embodiments of the invention are hereinafter discussed with reference to the drawings.
Fig. 1 is an exemplary aircraft showing the location of fuel tanks and fuel sensors.
Fig. 2A and 2B are a front view and side view, respectively, of an exemplary canister of a mounting system in accordance with the invention.
Fig. 3 is a side view of an exemplary cartridge in accordance with the invention, wherein an exemplary electronics module is shown inside the cartridge.
Fig. 4 is a side view illustrating the canister, cartridge and electronics module mounted to a wing spar in accordance with the invention.
Fig. 5 is a schematic diagram illustrating an exemplary power source for the electronics module.

### Detailed Description

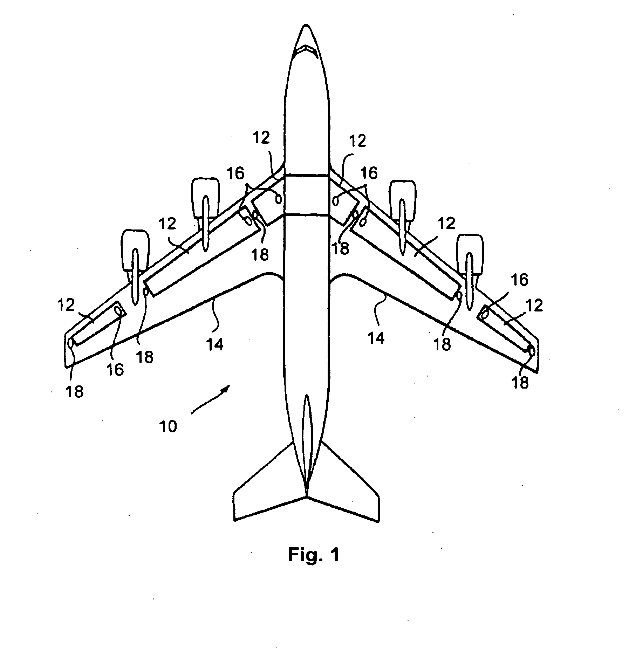

Referring initially to Fig. 1, an exemplary aircraft 10 includes a plurality of fuel tanks 12 mounted in wings 14 or other locations in the aircraft (not shown). Each fuel tank 12 includes one or more fuel sensors 16 for monitoring a fuel parameter, such as the fuel level or fuel temperature, for example. An electronics module 18 is mounted to a spar (not shown), and communicates to the fuel sensors 16 and other equipment. During flight, the wings 14 and spars within the wings 14 are exposed to extreme temperatures (e.g., about minus seventy degrees Celsius), which can be problematic for the fuel sensor's electronics module 18.

The present invention provides a system, apparatus and method for maintaining an ambient temperature for a device, such as the fuel sensor's electronics module 18, so as to shield or isolate the module 18 from the extreme temperatures encountered during flight or while on the ground. Moreover, active heating elements or special testing of the electronics module's components are not required (although such devices and/or techniques may be utilized within the scope of the invention). As described herein, thermal energy of fuel stored in the vehicle is used to maintain the ambient temperature for the device such that it is substantially the same as the fuel (e.g., within about five to ten degrees Celsius).

While the invention is described with respect to maintaining an ambient temperature for an electronics module, it will be appreciated that the invention may be used to maintain the ambient temperature for any device (electronic and non-electronic) or area. Further, while the invention is described in the context of an aircraft, it will be appreciated that it may be employed on any vehicle that utilizes relatively large fuel tanks, such as ships and locomotives, for example.

According to one aspect of the invention, a canister is in contact with the aircraft fuel and impervious to the fuel. The canister operates as a heat exchanger and utilizes the thermal energy stored in the fuel to maintain an ambient temperature within the canister. As will be appreciated, other types of heat exchangers may be used in place of the canister without departing from the scope of the invention (e.g., a shell and tube heat exchanger, a plate heat exchanger, etc.).

A cartridge is located within the canister, and the electronics module 18 is located in or on the cartridge. Both enclosures (i.e., the canister and cartridge) include sealed connectors that enable signals to enter and/or exit the respective enclosures while preventing fuel from entering the enclosures. By utilizing two enclosures, the thermal energy of the fuel can be easily used to maintain the temperature within both enclosures (and thus the electronics module 18), yet allow easy removal of the electronics module 18 without concern of fuel leakage or spillage.

As used herein, a canister is defined as a container, such as a box, can, cylinder, or the like. A cartridge is defined as a small modular unit designed to be inserted into a larger piece of equipment, such as a canister.

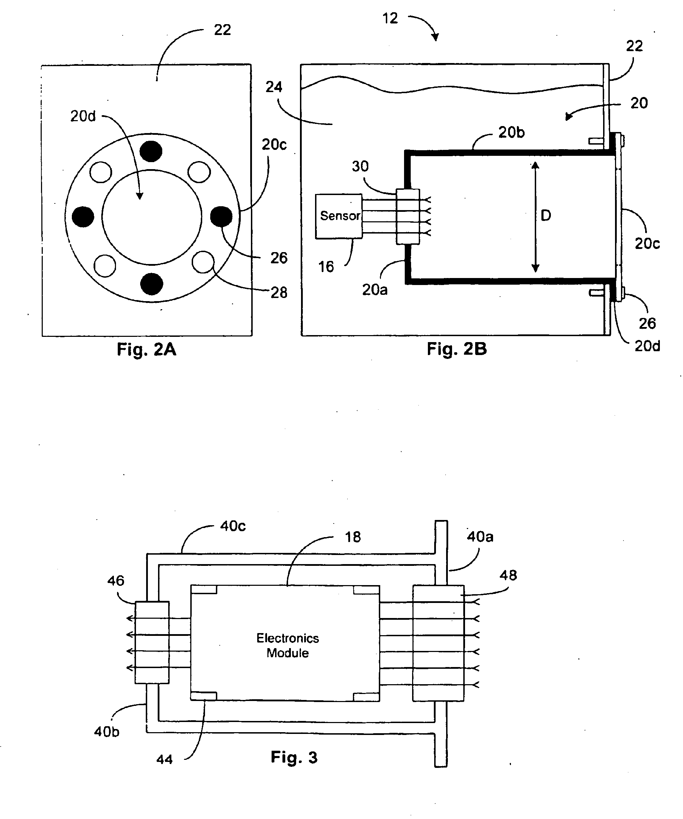

Referring now to Figs. 2A and 2B, there is shown a front and side view of an exemplary canister 20 mounted to a wing spar 22 of aircraft 10. As is conventional, the wing spar 22 defines a portion of a fuel tank 12 for holding fuel 24. At least a portion of the canister 20 is in contact with the fuel 24. Preferably, the canister 20 is located near a lower portion of the tank 12 so as to maintain contact with the fuel 24 for as long as possible as the fuel is consumed. Although the canister 20 is shown as a separate unit from the fuel tank 12, the canister may be integrally formed with the fuel tank.

The canister 20 comprises a cylindrical container having a diameter D and defined by circular bottom wall 20a and cylindrical side wall 20b, which also holds the canister 20 to the spar 22. The canister includes a flange 20d for interfacing with the spar 22 and is secured to the spare via fasteners 26 (e.g., screws or the like). A cover 20c may be attached to the open end 20e of the canister. The canister 20 may be made out of any material that is impervious to the fuel. Preferably, the canister 20 is formed from a light-weight material, such as aluminum, for example. Additionally, an insulation means may be included between the canister 20 and the spar 22 for galvanic or other reasons.

The cover 20c includes an opening 20f that enables access into the canister 20. The flange 20d and/or cover 20f provide a means of accepting fasteners 28, which secure the cartridge 40 when mounted in the canister 20.

The bottom wall 20a includes a hermetically sealed connector 30, such as, for example, an electrical connector or fiber optic connector for communicating signals into and out of the canister 20. For example, electrical or optical signals from fuel sensor 16 located within the fuel tank 12 can be provided to the interior of the canister 20 through the connector 30, without fuel entering the canister 20.

Referring now to Fig. 3, there is shown an exemplary cartridge 40. The cartridge 40 is defined by circular top and bottom walls 40a and 40b, and cylindrical sidewall 40c. The cartridge 40 is dimensioned so as to fit within the canister 20. As will be appreciated, the cylindrical shape of the canister 20 and cartridge 40 is merely exemplary, and any shape may be utilized for the canister 20 and cartridge 40. For example, the canister 20 may have a cylindrical shape and the cartridge 40 may have a rectangular shape, so long as the cartridge 40 fits within the canister 20.

Located within the cartridge 40 is an electronics module 18. The electronics model 18 includes circuitry for performing conventional data acquisition and processing operations. For example, the electronics module 18 may include a number of integrated circuits, resistors, capacitors, etc. mounted on a printed circuit board and operative to exchange data between the fuel sensors 16 and a central controller (not shown) and/or to perform signal conditioning operations (e.g., signal filtering or the like). The electronics module 18 can be mounted to the top, bottom and/or sidewalls 40a, 40b or 40c of the cartridge 40 using one or more mounting members 44, such as fasteners and standoffs, for example.

It is noted that the cartridge 40 may take on may different forms. For example, and as described above, the cartridge 40 may be a container wherein the electronics module 18 is mounted inside or on cartridge. Alternatively, the cartridge 40 may be a film, coating, or the like surrounding and/or formed over the electronics module 18 (e.g., the electronics module may be encased in an epoxy resin, or a thin coating may be formed over the outer surface of the electronics module 18). In another embodiment, the device itself may be the cartridge.

The cartridge 40 also includes a first connector 46 and a second connector 48. The first and second connectors 46 and 48 preferably are hermetically sealed connectors. This is advantageous, for example, in that if the connector 30 of the canister fails (e.g., it leaks), the fuel 24 will not be able to enter the interior of the cartridge 40 and contact the electronics module 18. The first and second connectors 46 and 48 are couplable to the electronics module 18 so as to enable signals in/on the electronics module to be provided to other local or remote devices. For example, the first and second connectors 46 and 48 may be edge connectors that mate with corresponding edge portions of the electronics module's printed circuit board so as to provide an electrical connection to/from the electronics module 18. As will be appreciated, any type of connecting means that enables signals to be transferred to/from the electronics module 18 and the canister 20 and cartridge 40 may be used.

Further, the first connector 46 is couplable to the connector 30 of the canister 20, thereby enabling signals to be transmitted and received from devices external to the canister 20 and cartridge 40. For example, the connector 30 of the canister 20 may include a female receptacle (e.g., a fitting equipped to receive a plug or the like for facilitating an electrical connection), and the first connector 46 of the cartridge 40 may include a male plug that corresponds to the female receptacle. When the connectors 30 and 46 are coupled together, a connection (e.g. an electrical or optical connection) is made from the inside of the cartridge 40 to the outside of the canister 20 (e.g., from the electronics module 18 to the fuel sensors 16 located within the fuel tank 12).

The second connector 48 extends through the top wall 40c of the cartridge 40 and is coupled to a wiring harness or the like, which is couplable to the central controller. Via the second connector 48, signals may be transmitted to and/or received from devices located outside the canister 20 and cartridge 40. For example, data collected by the electronics module 18 may be communicated to an avionics control system (not shown) or the like. Similarly, data may be communicated from the avionics control system to the electronics module 18 and/or the fuel sensors 12. Such data may be in the form of feedback signals (e.g., actual fuel temperature, level, etc.) or command signals (e.g., alarm setpoints).

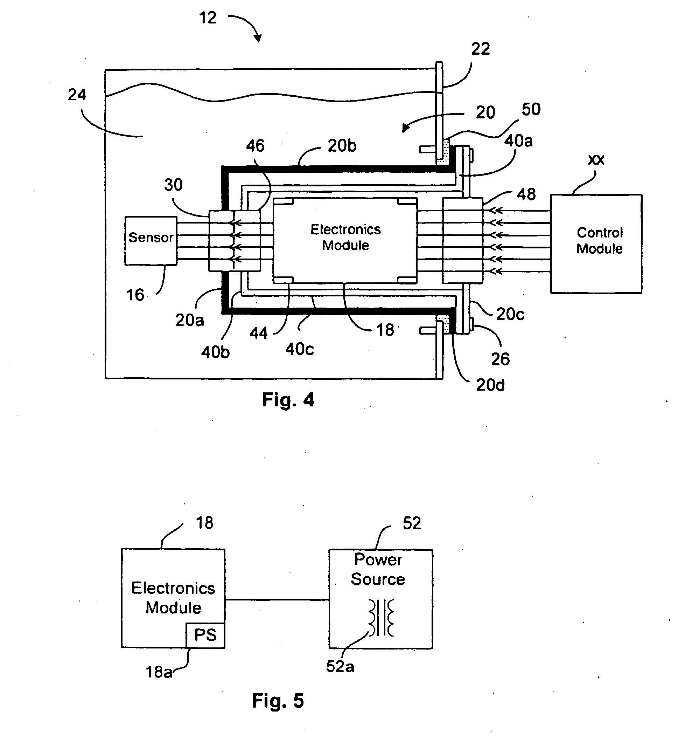

With further reference to Fig. 4, the electronics module 18 and cartridge 40 are shown mounted in the canister 20. As described above, the first connector 46 of the cartridge 40 mates with the connector 30 of the canister 20. This connection provides a communication path from the electronics module 18 (which is inside the cartridge 40) to the fuel sensors 16 (which are in the fuel tank 12 outside of the canister 20). The cartridge 40 may be removed from and inserted into the canister 20 via opening 20 within the flange 20d and cover 20c (if present).

As noted herein, the canister 20 is mounted near a bottom portion of the fuel tank 12 so as to immerse the canister 20 in fuel as long as possible. As the fuel is consumed, portions of the canister may become exposed and, as a result, the temperature of the canister 20 (and thus the cartridge 40 and electronics module 18) may approach that of the spar 22 and wing 14. To slow this process (and keep the electronics module 18 from becoming too cold too quickly) thermal insulation 50 can be placed between the canister 20 and the spar 22 as show in Fig. 4. Preferably, the thermal insulation 50 is electrically conductive so as provide protection against lighting strikes. Additionally, it is noted that if the canister 20 is mounted near a bottom portion of the fuel tank 12, exposure of the canister (if at all) occurs when the flight is nearly complete. Thus, the temperatures encountered by the exposed canister 20 will be substantially higher than minus 70 degrees Celsius.

As is known by those skilled in the art, lightning strikes can pose problems for aircraft electronics. To minimize the effects of lightning strikes, the electronics module 18 can be electrically isolated from the aircraft's frame ground, thereby providing enhanced protection against such strikes. For example, the electronics module 18 can be powered by an isolated power source. More specifically, and with reference to Fig. 5, a high frequency AC power source 52 can be used to power the electronics module 18. Preferably, the power source 52 operates on a frequency in the region of 10 KHz. The high frequency power source 52 is advantageous, for example, in that it allows the electronics module's power supply 18a to remain electrically isolated from other aircraft electronics. The electrical isolation can be accomplished, for example, using a small, lightweight ferrite transformer 52a in or near the power source 52. Additionally, by utilizing the high frequency power source 52, the power requirements of the electronics module 18 are simplified, thereby reducing the size and weight of the electronics module 18. The ferrite transformer 42a is designed to provide intrinsic safety, and forms part of the intrinsic safety barrier. Intrinsic safety of digital signals can be provided by optical isolation 52b. The electronics that interface with the in-tank sensors through connectors 46 and 30 are thus completely electrically isolated. Note that direct current power can be used, but additional circuitry would be required to provide the high frequency excitation for the ferrite transformer 52a.

Accordingly, an ambient temperature can be maintained for a device, such as an electronics module, using thermal energy stored in fuel. The thermal energy may be extracted via a mounting system that includes at least two enclosures, wherein one of the enclosures is in contact with the fuel and the other enclosure is in thermal communication with the fuel.

## Claims

1. A mount for maintaining an ambient temperature of an area of an aircraft within an operational range of at least one electrical device (18) located in the area, comprising:
a receptacle (20) extending into an interior of a fuel tank (12) and opening to an exterior of the fuel tank (12), said receptacle having a first fuel-tight enclosure;
a first sealed electrical or optical connector (30) creating a fuel-tight seal for establishing a through connection from the interior of the fuel tank (12) to the first fuel-tight enclosure;
a cartridge assembly (40) that is removably insertable into the first fuel-tight enclosure, said cartridge assembly having a second fuel-tight enclosure in which the at least one electrical device is located, wherein said second enclosure is in thermal communication with the fuel; and
the cartridge assembly includes a second sealed electrical or optical connector (46) creating a fuel-tight seal and being couplable to the first sealed electrical or optical connector (30).

2. The mount of claim 1, wherein the receptacle (20) is a canister including at least one surface exposed to an inner portion of the fuel tank (12), said cartridge assembly (40) in thermal communication with the at least one surface, wherein the cartridge assembly includes the at least one electrical device (18).

3. The mount of claims 1-2, wherein the cartridge assembly (40) is at least one of a container, a resin encasing the electrical device, or a film deposited over the electrical device.

4. The mount of claims 1-3, wherein said second sealed electrical or optical connector is operable to exchange signals between the electrical device (18) and a fuel sensor (16).

5. The mount of claim 4, wherein the cartridge assembly (40) includes a third electrical or optical connector (48) couplable to the electrical device (18) and external devices so as to enable transmission and reception of signals for control and/or monitoring of the fuel (24).

6. The mount of claims 1-5, further comprising a mounting member (20d) attachable to a support structure (22), said mounting member fixed to the receptacle (20), and an insulation medium (50) placed on the mounting member to thermally or galvanically insulate the mounting member (20d) from the support structure (22).

7. A system for maintaining an ambient temperature of an area within an operational range of one or more electrical devices located in the area, comprising the mount of claim 1 and the fuel tank (12) into which the receptacle extends.

8. A method of mounting a an electrical device in an aircraft so as to maintain an ambient temperature around the electrical device within an operational range of the electrical device, comprising:
placing at least one surface of a canister so as to contact fuel stored on the aircraft, wherein said canister includes a first fuel-tight enclosure;
providing a first fuel-tight electrical or optical connector (30) for establishing a through connection from the interior of the fuel tank (12) to the first fuel-tight enclosure;
placing a cartridge assembly inside the first fuel-tight enclosure, said cartridge assembly including a second fuel-tight enclosure in which the electrical device is located, wherein the second fuel-tight enclosure is in thermal communication with the fuel; and
the cartridge assembly includes a second sealed electrical or optical connector (46) creating a fuel-tight seal and being couplable to the first sealed electrical or optical connector (30).

9. The mount according to claim 1, wherein the second fuel-tight electrical or optical connector (46) provides a through connection from the first fuel-tight enclosure to the second fuel-tight enclosure.

10. The mount according to claim 1, wherein the receptacle is attached to a spar of the aircraft's wing.

## Patentansprüche

1. Aufbau für das Aufrechterhalten einer Umgebungstemperatur eines Bereichs eines Flugzeugs innerhalb eines Betriebsbereichs wenigstens einer in dem Bereich befindlichen elektrischen Vorrichtung (18), wobei der Aufbau aufweist:
eine Aufnahme bzw. einen Behälter (20), die bzw. der sich in das Innere eines Kraftstofftanks (12) erstreckt und sich zu einer Außenseite des Kraftstofftanks (12) hin öffnet, wobei der Behälter ein erstes kraftstoffdichtes Gehäuse hat,
einen ersten abgedichteten bzw. versiegelten elektrischen oder optischen Anschluß (30), welcher eine kraftstoffdichte Dichtung erzeugt, um eine durchgehende Verbindung vom Inneren des Kraftstofftanks (12) zu dem ersten kraftstoffdichten Gehäuse zu errichten,
eine Kassettenanordnung (40), welche entnehmbar in das erste kraftstoffdichte Gehäuse eingesetzt werden kann, wobei die Kassettenanordnung ein zweites kraftstoffdichtes Gehäuse aufweist, in welchem die wenigstens eine elektrische Vorrichtung angeordnet ist, wobei das zweite Gehäuse in thermischer Verbindung mit dem Kraftstoff steht, und
wobei die Kassettenanordnung einen zweiten abgedichteten, elektrischen oder optischen Anschluß (46) aufweist, welcher eine kraftstoffdichte Dichtung erzeugt und mit dem ersten abgedichteten elektrischen oder optischen Anschluß (30) gekoppelt werden kann.

2. Aufbau nach Anspruch 1, wobei der Behälter (20) ein Kanister ist, der wenigstens eine Oberfläche hat, die zu einem inneren Abschnitt des Kraftstofftanks (12) hin exponiert liegt, wobei die Kassettenanordnung (40) in thermischer Verbindung mit der wenigstens einen Oberfläche steht, wobei die Kassettenanordnung die wenigstens eine elektrische Vorrichtung (18) aufweist.

3. Aufbau nach einem der Ansprüche 1 bis 2, wobei die Kassettenanordnung (40) wenigstens entweder ein Behälter, ein die elektrische Vorrichtung umgebendes Harz oder ein über der elektrischen Vorrichtung abgeschiedener Film ist.

4. Aufbau nach einem der Ansprüche 1 bis 3, wobei der zweite abgedichtete, elektrische oder optische Anschluß so betreibbar ist, daß er Signale zwischen der elektrischen Vorrichtung (18) und einem Kraftstoffsensor (16) austauscht.

5. Aufbau nach Anspruch 4, wobei die Kassettenanordnung (40) einen dritten elektrischen oder optischen Anschluß (48) aufweist, welcher mit der elektrischen Vorrichtung (18) und externen Vorrichtungen gekoppelt werden kann, um die Übertragung und das Empfangen von Signalen zum Steuern und/oder Überwachen des Kraftstoffs (24) zu ermöglichen.

6. Aufbau nach einem der Ansprüche 1 bis 5, welcher weiterhin ein Befestigungs- bzw. Anbringungselement (20d), welches an einer Trägerstruktur (22) angebracht bzw. befestigt werden kann, wobei das Befestigungselement an dem Behälter (20) befestigt ist, und ein Isoliermedium (50) aufweist, welches an dem Befestigungselement angeordnet ist, um das Befestigungselement (20d) thermisch oder galvanisch gegenüber der Trägerstruktur (22) zu isolieren.

7. System zum Aufrechterhalten einer Umgebungstemperatur eines Bereichs innerhalb eines Betriebsbereichs einer oder mehrerer in dem Bereich befindlicher elektrischer Vorrichtungen, wobei das System den Aufbau nach Anspruch 1 und den Kraftstofftank (12), in welchen sich der Behälter hinein erstreckt, aufweist.

8. Verfahren zum Montieren bzw. Anbringen einer elektrischen Vorrichtung in einem Flugzeug, um eine Umgebungstemperatur um die elektrische Vorrichtung herum innerhalb eines Betriebsbereichs der elektrischen Vorrichtung aufrechtzuerhalten, wobei das Verfahren umfaßt:
Anordnen wenigstens einer Oberfläche eines Kanisters derart, daß sie mit in dem Flugzeug gelagertem Kraftstoff in Kontakt kommt, wobei der Kanister ein erstes kraftstoffdichtes Gehäuse aufweist,
Vorsehen eines ersten kraftstoffdichten, elektrischen oder optischen Anschlusses (30) zum Einrichten einer durchgehenden Verbindung vom Inneren des Kraftstofftanks (12) zu dem ersten kraftstoffdichten Gehäuse,
Anordnen einer Kassettenanordnung innerhalb des ersten kraftstoffdichten Gehäuses, wobei die Kassettenanordnung ein zweites kraftstoffdichtes Gehäuse aufweist, in welchem die elektrische Vorrichtung angeordnet ist, wobei das zweite kraftstoffdichte Gehäuse in thermischer Verbindung mit dem Kraftstoff steht, und
wobei die Kassettenanordnung einen zweiten abgedichteten, elektrischen oder optischen Anschluß (46) aufweist, welcher eine kraftstoffdichte Dichtung erzeugt und mit dem ersten abgedichteten elektrischen oder optischen Anschluß (30) gekoppelt werden kann.

9. Aufbau nach Anspruch 1, wobei der zweite kraftstoffdichte elektrische oder optische Anschluß (46) eine durchgehende Verbindung von dem ersten kraftstoffdichten Gehäuse zu dem zweiten kraftstoffdichten Gehäuse bereitstellt.

10. Aufbau nach Anspruch 1, wobei der Behälter an einem Holm am Tragflügel des Flugzeugs angebracht ist.

## Revendications

1. Montage pour maintenir une température ambiante d'une zone d'un aéronef à l'intérieur d'une plage opérationnelle d'au moins un dispositif électrique (18) situé dans la zone, comprenant :
une embase (20) s'étendant dans un intérieur d'un réservoir de carburant (12) et
s'ouvrant sur un extérieur du réservoir de carburant (12), ladite embase ayant une première enceinte étanche au carburant ;
un premier connecteur électrique ou optique étanche (30) créant un joint étanche au carburant pour établir une connexion traversante de l'intérieur du réservoir de carburant (12) à la première enceinte étanche au carburant ;
un ensemble de cartouche (40) qui peut être inséré de manière amovible dans la première enceinte étanche au carburant, ledit ensemble de cartouche ayant une deuxième enceinte étanche au carburant dans laquelle l'au moins un dispositif électrique est situé, dans lequel ladite deuxième enceinte est en communication thermique avec le carburant ; et
l'ensemble de cartouche comprend un deuxième connecteur électrique ou optique étanche (46) créant un joint étanche au carburant et pouvant être couplé au premier connecteur électrique ou optique étanche (30).

2. Montage selon la revendication 1, dans lequel l'embase (20) est une boîte comprenant au moins une surface exposée à une partie intérieure du réservoir de carburant (12), ledit ensemble de cartouche (40) étant en communication thermique avec l'au moins une surface, dans lequel l'ensemble de cartouche comprend l'au moins un dispositif électrique (18).

3. Montage selon l'une quelconque des revendications 1 et 2, dans lequel l'ensemble de cartouche (40) est au moins l'un d'un conteneur, d'une résine enveloppant le dispositif électrique, ou d'un film disposé sur le dispositif électrique.

4. Montage selon l'une quelconque des revendications 1 à 3, dans lequel ledit deuxième connecteur électrique ou optique étanche est utilisable pour échanger des signaux entre le dispositif électrique (18) et un capteur de carburant (16).

5. Montage selon la revendication 4, dans lequel l'ensemble de cartouche (40) comprend un troisième connecteur électrique ou optique (48) pouvant être couplé au dispositif électrique (18) et des dispositifs externes de manière à permettre la transmission et la réception de signaux pour le contrôle et/ou la surveillance du carburant (24).

6. Montage selon l'une quelconque des revendications 1 à 5, comprenant en outre un élément de fixation (20d) pouvant être attaché à une structure de support (22), ledit élément de fixation étant fixé sur l'embase (20), et un support d'isolation (50) étant placé sur l'élément de fixation pour isoler thermiquement ou galvaniquement l'élément de fixation (20d) de la structure de support (22).

7. Système pour maintenir une température ambiante d'une zone à l'intérieur d'une plage opérationnelle d'un ou plusieurs dispositifs électriques situés dans la zone, comprenant le montage selon la revendication 1 et le réservoir de carburant (12) dans lequel l'embase s'étend.

8. Procédé de fixation d'un dispositif électrique dans un aéronef de manière à maintenir une température ambiante autour du dispositif électrique à l'intérieur d'une plage opérationnelle du dispositif électrique, comprenant les étapes consistant à :
placer au moins une surface d'une boîte pour qu'elle soit en contact avec le carburant stocké dans l'aéronef, dans lequel ladite boîte comprend une première enceinte étanche au carburant ;
fournir un premier connecteur électrique ou optique étanche au carburant (30) pour établir une connexion traversante de l'intérieur du réservoir de carburant (12) à la première enceinte étanche au carburant ;
placer un ensemble de cartouche à l'intérieur de la première enceinte étanche au carburant, ledit ensemble de cartouche comprenant une deuxième enceinte étanche au carburant dans laquelle le dispositif électrique est situé, dans lequel ladite deuxième enceinte étanche au carburant est en communication thermique avec le carburant ; et
l'ensemble de cartouche comprend un deuxième connecteur électrique ou optique étanche (46) créant un joint étanche au carburant et pouvant être couplé au premier connecteur électrique ou optique étanche (30).

9. Montage selon la revendication 1, dans lequel le deuxième connecteur électrique ou optique étanche au carburant (46) assure une connexion traversante de la première enceinte étanche au carburant à la deuxième enceinte étanche au carburant.

10. Montage selon la revendication 1, dans lequel l'embase est attachée à un longeron de l'aile de l'aéronef.
